# EUROPEAN PATENT APPLICATION

(11) **EP 1 976 247 A1**
(43) Date of publication of application: **01.10.2008**
(21) Application number: 06775557.9
(22) Date of filing: 31.08.2006
(51) Int. Cl.: H04M 1/66

(54) **A CALL CONTROL METHOD OF TELEPHONE USER AND SHORT MESSAGE TRANSMIT**

(30) Priority: 21.12.2005 CN 200510121074
(71) Applicant: Huawei Technologies Co., Ltd., Longgang District, Shenzhen Guangdong 518129 (CN)
(72) Inventor: YAO, Xin, Guangdong 518129 (CN)
(74) Representative: Haley, Stephen
(86) International application number: PCT/CN2006/002240
(87) International publication number: WO 2007/071139

(57) **Abstract**

A control method of telephone user call is provided, which includes the following steps. A telephone user makes a call, and transmits a calling message to a corresponding processing device. The processing device extracts calling information of the user from the calling message, compares with a trap identification (trap ID) database, and determines whether a called number matches with one of the trap IDs in the database. If the called number does not match with any of the trap IDs, the call continues. If the called number matches with one of the trap IDs, the processing device notifies the query result and warning information to the user. The present invention can prevent the user from dialing a trap telephone number effectively, and avoid economic loss generated unconsciously.

## Description

### Field of the Invention

The present invention relates to the field of communication technology, and more particularly to a control method of telephone user call and short message transmission.

### Background of the Invention

With the rapid development of communication technology, fixed-line phones and mobile phones are gradually popularized, and have changed the life style of people to some extent. Communication (for example of speech, data, and image) with family members or friends can basically be performed anywhere at any time. Thus, freedom of communication in the true sense is realized. The combination of mobile communication network and public switched telephone network will gradually form an intelligent broadband global information network that provides multimedia services for everyone. However, when providing convenience for the clients, communication tools are also taken advantage of by some lawbreakers. For example, mobile phone users often come across calls hung up just after one ringing tone. A missed call number would be left on the mobile phone. It is difficult for ordinary mobile phone users to determine the real identity of the caller according to the telephone number. The common practice is to call back the missed call number, which may be a very expensive voice-guide call, charging several Yuan, dozens of Yuan or even more per minute. Although the users do not want to pay for a call of this type, the call has been recorded in fact. The users are bothered and disturbed and the ordinary life of people is severely impacted.

Similarly, with respect to short message service of mobile phone, cheating situations also often occur. For example, when a message is received, the content of which is deceptive, if a reply short message is transmitted, a short message service is unconsciously subscribed. There is also a large number of this kind of reports. Although current operators provide real time inquiring functions for the bill and call charge, the users usually will not find out until paying the bill or an abnormal situation of pre-paid charging fund occurs, according to user habits. However, loss of the users already took place, which is hard to recover. Likewise, the operators also provide functions for inquiring which short message services are subscribed. However, according to user habits, few users inquire in time, and the users usually will not find out until an abnormal situation of the call charge occurs as well. For some short message services with little expense per month, the users even will not find out at all, which causes continuing economic loss.

Since telephone numbers (including mobile phones and fixed-line phones) are generally indicated by numerals, it is difficult for the users to distinguish whether the other party is a normal user or a trap, which brings some trouble to the normal life of the users. There is an urgent need for a mechanism to solve the above problems.

### SUMMARY OF THE INVENTION

An object of the present invention is to provide a control method of telephone user call for preventing the user from dialing a trap telephone number and a control method of short message transmission for preventing the user from sending a short message to a trap telephone number.

The present invention provides a control method of telephone user call, which includes the following steps.

A telephone user makes a call, and transmits a calling message to a corresponding processing device.

The processing device extracts calling information of the user from the calling message, compares with a trap identification (trap ID) database, and determines whether a called number matches with one of trap IDs in the database.

If the called number does not match with any of the trap IDs, the call continues.

If the called number matches with one of trap IDs, the processing device notifies inquiry result and warning information to the user.

The telephone user includes a fixed-line phone user or a mobile phone user. The corresponding processing device is a device adapted to process calls of users in a fixed-line phone network, a mobile communication network, or an IP Multi-media system (IMS) network.

More preferably, a function of comparing the called number with the trap IDs in the database is selected to be turned on or turned off as desired.

More preferably, the trap IDs are classified, and the called number is selectively compared with related classes of trap IDs in the database according to the classified classes.

The trap ID database includes a public trap ID database and a personal trap ID database. The personal trap ID database is updated as desired, including adding data into, modifying, or deleting data in the personal trap ID database.

The present invention also provides a method of short message transmission, which includes the following steps.

A terminal transmits a short message service (SMS) message to a communication service processing device.

The communication service processing device extracts information of a user terminal receiving the short message from the SMS message, compares with a trap ID database, and determines whether the telephone number of the user receiving the short message matches with one of the trap IDs registered in the database. If the telephone number of the user receiving the short message does not match with any of the trap IDs, the transmission continues.

If the telephone number of the user receiving the short message matches with one of trap IDs, the processing device notifies inquiry result and warning information to the user transmitting the short message.

Whether to continue or end the transmission is determined according to the warning information.

More preferably, a function of comparing the called number with the trap IDs registered in the database is selected to be turned on or turned off as desired.

Preferably, the trap IDs are classified, and the called number is selectively compared with related classes of trap IDs in the database according to the classified classes.

The trap ID database includes a public trap ID database and a personal trap ID database. The personal trap ID database is updated as desired, including adding data into, modifying, or deleting data in the personal trap ID database.

To sum up, with a trap telephone number database, the present invention automatically identifies a targeted number before establishing a call or transmitting a mobile phone short message by a telephone user, and warns the user in time. Therefore, the present invention can effectively prevent the user from dialing a trap telephone number or sending a short message to a trap telephone number, thus avoiding unnecessary trouble and economic loss.

### BRIEF DESCRIPTION OF THE DRAWINGS

FIG 1 is a schematic structural diagram of a communication system used in the present invention.

FIG2 is a flow chart of processes of a communication method according to an embodiment of the present invention.

### DETAILED DESCRIPTION OF THE EMBODIMENTS

In order to make the principle, features, and advantages of the present invention clearer, detail description is given below with reference to accompanying drawings.

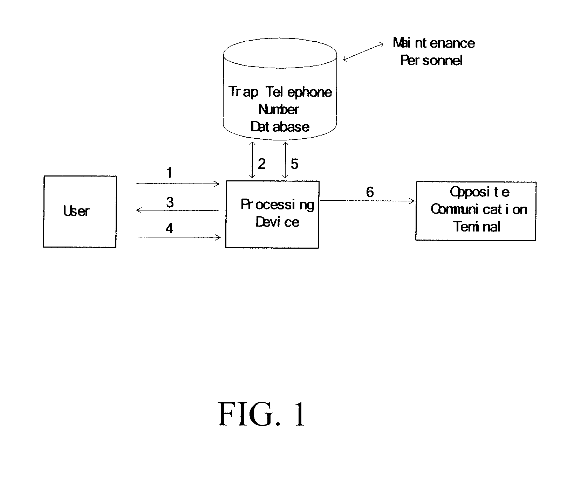

A single fixed-line phone or mobile phone user generally cannot memorize all telephone numbers of trap calls/messages, whereas operators of communication networks such as fixed networks, wireless networks, IP Multi-Media System (IMS) networks, or the like, are capable of collecting trap telephone numbers and establishing trap telephone number databases. Referring to FIG 1, specific processes are described as follows.

In Step 1, a user makes a call. In Step 2, a processing device stores the obtained calling information into a trap telephone number database. In Step 3, the processing device responds to the call of the user. In Step 4, the user confirms. In Step 5, the processing device inquires the trap telephone number database and obtains query result from the database. In step 6, the call continues toward the opposite communication terminal.

The database can be real time updated during daily operation process. There are a variety of updating routes, for example, updating by regularly collecting trap telephone numbers from the public security departments, or by reports of the users.

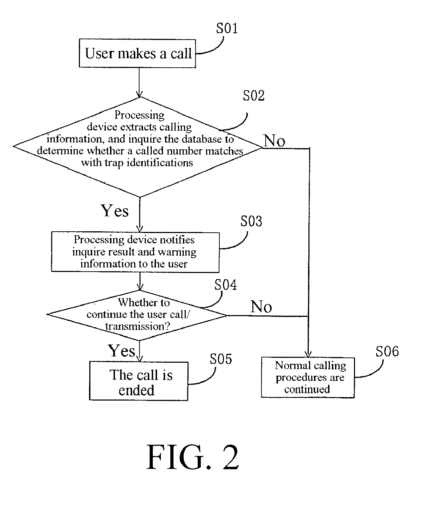

FIG.2 is a flow chart of processes of a communication method according to an embodiment of the present invention. Referring to FIG 2, for example, the user calls and transmits a short message via a mobile phone.

In step S01, a telephone user makes a call, and transmits a calling message to a corresponding processing device. The call mainly involves a calling party, a processing device on the calling side, a called party (shown as the opposite communication terminal in the figure). There are corresponding devices adapted to process calls of users in networks such as fixed networks, wireless networks, IMS networks, or the like. In the communication field, the processing device can be implemented into one or several specific physical devices by those related in the ark.

In the case of transmitting short messages, the user transmits a short message to a corresponding short message processing device of a mobile operator.

In step S02, the processing device extracts calling information of the user, compares with a trap telephone number database, and determines whether a called number matches with one of trap telephone numbers registered in the database.

The user can select to turn on or turn off the function of comparing the called number with the trap telephone numbers registered in the database as desired. The trap telephone numbers are classified in the database and the user can further select to compare the called number with only one class or several classes of trap telephone numbers in the database as desired. In addition, the trap telephone number database includes a public trap telephone number database and a personal trap telephone number database. The user can add data into, modify, or delete data in the personal trap telephone number database. The trap telephone number database can select to feedback the class to which the called number belongs when feedbacking the query result.

If the called number does not match with one of the trap telephone numbers, step S06 is performed; otherwise, step S03 is performed.

In the case of transmitting short messages, the processing device of the mobile operator extracts information of a user receiving the short message, compares with a trap telephone number database, and determines whether the telephone number of the user receiving the short message matches with one of the trap telephone numbers registered in the database. If the telephone number of the user receiving the short message does not match with one of the trap telephone numbers, step S06 is performed; otherwise, step S03 is performed.

In step S03, the processing device notifies query result and warning information to the user. In the case of telephone calls, a string of warning tones can be played for the user, and the user is required to determine whether to continue the call, for example, "to continue the call, press the key button ××; to end the call, press the key button ××," or "to continue, press the key button ×× within five seconds; otherwise, the call will be automatically hung up," or "to end the call, press the key button ×× within certain time; otherwise, the call is automatically continued," and the like.

In the case of processing short message transmission, the system replies a short message information. In order to distinguish from other short messages, the short message transmitted by the system can carry the original short message transmitted by the user with corresponding result attached. It needs to warn the user to perform the next operation, for example, "reply what kind of short messages will continue to transmit the original short message, and reply what kind of short messages will end the short message transmission," or "transmit what kind of short messages within certain time will continue; otherwise, the transmission will be automatically given up," or "transmit what kind of short messages within certain time will end; otherwise, the short message will be automatically transmitted," and the like. All of the above can use the prior art, and will not be repeated herein.

In step S04, when obtaining corresponding warning information, the user can determine whether to continue or end the call according to the warning information.

In the case of transmitting short messages, the user can determine whether to continue or end the transmission according to the warning information. The user transmits the selection to the processing device. If no selection is transmitted, it indicates that a default option is selected.

In order to self-define (individualize) the trap telephone number database more effectively, in step S03, the processing device may also add a function similar to "the telephone number will no longer be warned," for example, "the telephone number will not be warned and will be permitted all the time after which key button is pressed," or "the telephone number will not be warned and will be rejected all the time after which key button is pressed," and the like. Likewise, in the case of transmitting short messages, there may also be similar warning information.

In step S05, the processing device processes according to the feedback of the user. If no selection is transmitted, it indicates that a default processing mode is selected. For example, if corresponding key buttons are not pressed within a period of time, the call is automatically continued or ended.

If it is selected to continue the call, step S06 is performed. If it is selected to end the call, the call is ended.

In the case of transmitting short messages, if it is selected to continue the transmission, step S06 is performed; otherwise, the short message transmission is ended.

In step S06, the call of the user normally continues, or the user normally transmits the short message.

The above embodiment is provided for illustrating and explaining the principle of the present invention. It should be understood that the specific embodiments of the present invention are not intended to be limited to this. To those skilled in the art, various modifications and variations made without departing from the spirit and scope of the present invention are encompassed in the claims of the present invention.

## Claims

1. A control method of telephone user call, comprising:
making, by a telephone user, a call, and transmitting a calling message to a corresponding processing device;
extracting, by the processing device, calling information of the user from the calling message, comparing with a trap identification (trap ID) database, and determining whether a called number matches with one of the trap IDs in the database;
continuing the call, if the called number does not match with any of the trap IDs;
notifying, by the processing device, the query result and warning information to the user, if the called number matches with one of the trap IDs.

2. The control method of telephone user call according to claim 1, wherein the telephone user comprises a fixed-line phone user or a mobile phone user, and the corresponding processing device is a device adapted to process calls of users in a fixed-line phone network, a mobile communication network, or an IP Multi-media system (IMS) network.

3. The control method of telephone user call according to claim 1, wherein a function of comparing the called number with one of the trap IDs in the database is selected to be turned on or turned off as desired.

4. The control method of telephone user call according to claim 3, wherein the trap IDs are classified, and the called number is selectively compared with related classes of trap IDs in the database according to the classified classes.

5. The control method of telephone user call according to claim 4, wherein the trap ID database comprises a public trap ID database and a personal trap ID database, and the personal trap ID database is updated as desired, comprising adding data into, modifying, or deleting data in the personal trap ID database.

6. A control method of short message transmission, comprising:
transmitting, by a terminal, a short message service (SMS) message to a communication service processing device;
extracting, by the communication service processing device, information of a user terminal receiving a short message from the SMS message, comparing with a trap ID database, and determining whether a telephone number of the user receiving the short message matches with one of trap IDs registered in the database; and continuing the transmission, if the telephone number of the user receiving the short message does not match with any of the trap IDs;
notifying, by the processing device, query result and warning information to the user transmitting the short message, if the telephone number of the user receiving the short message matches with one of the trap IDs;
determining whether to continue or end the transmission, according to the warning information.

7. The control method of short message transmission according to claim 6, wherein a function of comparing the called number with the trap IDs registered in the database is selected to be turned on or turned off as desired.

8. The control method of short message transmission according to claim 6, wherein the trap IDs are classified, and the called number is selectively compared with related classes of trap IDs in the database according to the classified classes.

9. The control method of short message transmission according to claim 8, wherein the trap ID database includes a public trap ID database and a personal trap ID database, and the personal trap ID database is updated as desired, comprising adding data into, modifying, or deleting data in the personal trap ID database.
